# EUROPÄISCHE PATENTSCHRIFT

(11) **EP 4 490 340 B1**
(45) Veröffentlichungstag und Bekanntmachung des Hinweises auf die Patenterteilung: **24.12.2025**
(21) Anmeldenummer: 23704082.9
(22) Anmeldetag: 06.02.2023
(51) Int. Cl.: C25B 1/04, C25B 9/05, C25B 9/19, C25B 15/02, C25B 15/025, C25B 15/027, C25B 15/033

(54) **VERFAHREN ZUM BETRIEB EINES ELEKTROLYSEURS ZUR HERSTELLUNG VON WASSERSTOFF UND SAUERSTOFF**
METHOD OF OPERATING AN ELECTROLYSER FOR PRODUCTION OF HYDROGEN AND OXYGEN
PROCÉDÉ PERMETTANT DE FAIRE FONCTIONNER UN ÉLECTROLYSEUR DESTINÉ À LA PRODUCTION D'HYDROGÈNE ET D'OXYGÈNE

(30) Priorität: 10.03.2022 DE 102022202395
(43) Veröffentlichungstag der Anmeldung: 15.01.2025
(73) Patentinhaber: Robert Bosch GmbH, 70442 Stuttgart (DE)
(72) Erfinder: HARTIG-WEISS, Alexandra, 91560 Heilsbronn (DE); BECK, Tobias Alexander, 70188 Stuttgart (DE); STEINER, Dietmar, 73642 Welzheim (DE); HACKENBERG, Juergen, 74343 Sachsenheim (DE); BAUER, Harald, 71139 Ehningen (DE)
(86) Internationale Anmeldenummer: PCT/EP2023/052771
(87) Internationale Veröffentlichungsnummer: WO 2023/169749

(56) Entgegenhaltungen:
- EP-A1- 3 626 858
- EP-A1- 3 795 719
- DE-A1- 102013 021 627

## Beschreibung

### Technisches Gebiet

Die Erfindung bezieht sich auf ein Verfahren zum Betrieb eines Elektrolyseurs zur Herstellung von Wasserstoff und Sauerstoff mit einer für OH-Ionen durchlässigen Membran, die einen Anodenraum und einen Kathodenraum voneinander trennt. Des Weiteren bezieht sich die Erfindung auf die Verwendung des Verfahrens zum Betreiben eines Elektrolyseurs oder eines alkalischen Elektrolyseurs mit temporärem Wassertransport durch eine Membran zur Befeuchtung/Benetzung eines Kathodenraums.

### Stand der Technik

Elektrolyseure umfassen im Allgemeinen eine polymere Membran, die für OH-Ionen durchlässig ist, sowie zwei Elektroden auf der jeweils gegenüberliegenden Seite der in der Regel aus Polymermaterial gefertigten Membran. Ein wässriger Elektrolyt, so zum Beispiel eine KOH-Lösung, wird zum Beispiel auf der sauerstoffproduzierenden Seite beziehungsweise Anodenseite in eine Kammer zugeführt. Die der die Kammer trennende Membran gegenüberliegende Seite wird optional ebenfalls von einem Elektrolyten durchströmt und produziert Wasserstoff. Insbesondere im nicht-stationären Betrieb können lokal auftretende Temperaturspitzen insbesondere das polymere Membranmaterial schwächen, was unter anderem dazu führen kann, dass die Membran ausdünnt und infolgedessen durch übermäßige Gasdiffusion oder Lochbildung versagt. Aus der Publikation "P. Millet et al., Cell Failure Mechanisms in PEM Water Electrolyzers, International Journal of Hydrogen Energy, vol. 37, issue 22, November 2012, pp. 17478-17487, https://doi.org/10.1016/j.ijhydene.2012.06.017, geht hervor, dass die auf der Wasserstoffseite angeordnete Kathode insbesondere beim Abstellen zum lokalen Austrocknen von der Membran nähergelegenen Strukturen neigt. Beim Wiederanfahren liegt ein Versagensszenario insbesondere darin, dass noch kein thermisches Gleichgewicht an der Membran verwirklicht ist und lokale Temperaturspitzen durch fehlendes Wasser, welches eine gute Kühlwirkung hat, zu Membrandefekten führen kann.

Eine trocken betriebene Kathode besitzt durch das fehlende Wasser zudem eine geringere Wärmekapazität verglichen mit einer Kathode, die wassergeflutet betrieben wird, so dass Zellen und Stacks schneller auskühlen.

EP 2 451 992 B2 zeigt eine Ausführungsvariante, die vorteilhaft auf der Kathodenseite (der Wasserstoffseite) trocken betrieben wird, d. h. ohne die Zuführung eines KOH-Elektrolyten, damit unter anderem der Aufwand zur Trocknung des Wasserstoffs gering bleibt. Dort wird vorgeschlagen, zur elektrolytischen Herstellung von Wasserstoff eine alkalisch-wässrige Lösung einzusetzen, ausgehend von der trockenen Kathode. Die Vorrichtung umfasst Folgendes: Zwei Halbzellen, eine anodische und eine kathodische, die durch eine Anionenaustauschermembran getrennt sind, deren mit der kathodischen Halbzelle in Kontakt stehende Oberfläche eine Membran-Elektroden-Einheit (MEA) bildet, wobei die alkalische Lösung nur in der anodischen Halbzelle vorhanden ist.

Bei einer trockenen Kathode beziehungsweise bei einem trocken betriebenen Kathodenraum gemäß EP 2 451 992 B2 wird kathodenseitig, d. h. wasserstoffseitig, kein Wasserkreislauf vorgesehen. Erfolgt die Abschaltung des Elektrolyseurs, können sich inhomogene Temperaturen an den Membranen ausbilden. Da die Kathodenseite, d. h. der Kathodenraum, nur mit Wasserstoffgas gefüllt ist, ist die speicherbare Wärme geringer als im Fall eines mit Wasser oder einem anderen Medium gefluteten Kathodenraums. Eine Erwärmung beim Wiederanfahren des Elektrolyseurs kann somit ausschließlich über die Anodenseite erfolgen, wohingegen die Wasserspaltung zu OH- an der kathodenseitigen Membran stattfindet. Da hier Polymermembranen mit schlechter Wärmeleitfähigkeit zum Einsatz kommen, ist mit einer lokalen Überhitzung bei schnellen Anfahrprozessen zu rechnen. Die Ursache hierfür liegt in der unterschiedlich ausgeprägten elektrischen Kontaktierung einzelner Bereiche, in denen bevorzugt die Wasserspaltung einsetzt. Solange der Wasserfluss durch die Membran zur Spaltung der OH- nicht gleichmäßig erfolgt, arbeitet die Katalysatorebene nur bedingt gleichmäßig und kann lokale Hotspots bilden, die mittelfristig zu Degradation und kurzfristig zu Membranversagen führen können.

### Darstellung der Erfindung

Erfindungsgemäß wird ein Verfahren vorgeschlagen zum Betrieb eines Elektrolyseurs zur Herstellung von Wasserstoff und Sauerstoff mit einer für OH-Ionen durchlässigen Membran, die einen Anodenraum und einen Kathodenraum voneinander trennt, wobei nachfolgende Verfahrensschritte durchlaufen werden:
a) Temporäres, trockenes Betreiben des Kathodenraums,
b) temporär stattfindende Diffusion von Wassermolekülen durch die Membran vom Anodenraum in den Kathodenraum,
c) Variation eines Differenzdrucks zwischen Anodenraum und Kathodenraum mittels eines Drosselventils und
d) Einstellen der Befeuchtung/Benetzung des Kathodenraums durch Einstellung eines definierten Differenzdrucks.

Durch die erfindungsgemäß vorgeschlagene Lösung kann ein Wassereinzug, der auch als Wasser-Drag bezeichnet wird, vom Anodenraum in den Kathodenraum durch gezielte Beeinflussung des Differenzdrucks zwischen Anodenraum und Kathodenraum gesteuert werden, so dass die temporär trocken betriebenen Teile des Kathodenraums, insbesondere die Umgebung der Membran regelmäßig ausreichend befeuchtet werden. Dadurch wird ein homogenes Temperaturniveau geschaffen, um Schädigungen über Lebensdauer des Membranmaterials der den Anodenraum und den Kathodenraum trennenden Membran frühzeitig entgegenzuwirken.

Beim erfindungsgemäß vorgeschlagenen Verfahren erfolgt in vorteilhafter Weise eine kontrollierte Wasserdiffusion, vorzugsweise von vollentsalztem Wasser durch die den Anodenraum und den Kathodenraum voneinander trennende Membran, die bevorzugt als Membran aus Polymermaterial ausgeführt ist.

In vorteilhafter Weiterbildung des erfindungsgemäß vorgeschlagenen Verfahrens wird zur kontrollierten Wasserdiffusion vom Anodenraum in den Kathodenraum vollentsalztes Wasser eingesetzt, welches bevorzugt eine elektrische Leitfähigkeit von < 0,1 µS aufweist.

Alternativ kann beim erfindungsgemäß vorgeschlagenen Verfahren, für den Fall, dass ein alkalischer Elektrolyseur betrieben wird, als flüssiges Medium anstelle von vollentsalztem Wasser eine KOH-Lösung eingesetzt werden.

Das erfindungsgemäß vorgeschlagene Verfahren sieht in vorteilhafter Weise vor, dass bei einer Absenkung eines Drucks p_{K} im Kathodenraum ein molares Transportverhältnis H₂O/H₂ erhöht wird. Das molare Transportverhältnis H₂O/H₂ wird als Molenbruch, also die Diffusionsbewegung von Molwassermolekülen zu Molwasserstoffmolekülen bezeichnet.

In vorteilhafter Weise wird beim erfindungsgemäß vorgeschlagenen Verfahren der Druck p_{K} im Kathodenraum durch entsprechende Einstellung des Drosselventils im Sekundenbereich variiert, so dass Druckschwankungen erzeugt werden.

In vorteilhafter Weiterbildung des der Erfindung zugrundeliegenden Gedankens beeinflussen eine Variation des Drucks p_{K} im Kathodenraum und dadurch erzeugte Druckspitzen im Kathodenraum das molare Transportverhältnis H₂O/H₂.

Beim erfindungsgemäß vorgeschlagenen Verfahren kann über den Wassertransport in den Kathodenraum die Temperatur im Kathodenraum beeinflusst werden.

Des Weiteren bezieht sich die Erfindung auf die Verwendung des Verfahrens zum Betreiben eines Elektrolyseurs oder eines alkalischen Elektrolyseurs mit temporärem Wassertransport durch eine Membran zur Befeuchtung/Benetzung eines Kathodenraums.

### Vorteile der Erfindung

Durch die erfindungsgemäß vorgeschlagene Lösung kann eine Seite, insbesondere die Kathodenseite einer PEM- oder AEM-Elektrolysezelle beziehungsweise eines Elektrolyse-Stacks im Betrieb nur temporär trocken betrieben werden, um die Wasserstofftrocknungskosten und den hierfür erforderlichen Energieaufwand gering zu halten. Andererseits kann durch die erfindungsgemäß vorgeschlagene Lösung die Kathodenseite temporär wenigstens teilweise geflutet oder befeuchtet beziehungsweise benetzt werden, um schnellere Lastwechsel, insbesondere beim Steigern der Wasserstoffproduktion zu ermöglichen und auch um ein zu schnelles inhomogenes Auskühlen der Elektrolysezelle beziehungsweise des Elektrolyse-Stacks zu verhindern. In vorteilhafter Weise kann durch die Erfindung eine Flutung oder Befeuchtung vorzugsweise auf der Kathodenseite erfolgen, so dass die Wasserstoffproduktion gezielt gesteuert werden kann, was über eine gezielte Dosierung von vorzugsweise vollentsalztem Wasser mit Leitfähigkeiten von < 0,1 µS erreicht wird. Die erfindungsgemäß vorgeschlagene Lösung ermöglicht eine kontrollierbare Wasserdiffusion von der Anodenseite zur Kathodenseite durch die Membran. Die Kontrolle, d. h. die Steuerung der Wasserdiffusion vom Anodenraum zum Kathodenraum erfolgt über die Variation des Druckunterschieds zwischen dem Kathodenraum und dem Anodenraum.

Die erfindungsgemäß vorgeschlagene Lösung nutzt in vorteilhafter Weise aus, dass beim Ionentransport durch die den Anodenraum und den Kathodenraum voneinander trennende Polymermembran auch Wassermoleküle vom Anodenraum in den Kathodenraum mitgerissen werden. Dieser "Wasser-Drag" ist abhängig von der Druckdifferenz zwischen der Kathodenseite und der Anodenseite der Elektrolysezelle. Durch eine Variation des Differenzdrucks von der Kathoden- zur Anodenseite kann der Wassertransport in den Kathodenraum und damit die Befeuchtung beziehungsweise Benetzung der Kathode eingestellt werden.

Wird der Druck im Kathodenraum zeitlich variiert, so besteht die Möglichkeit, über eine Variation im Sekundenbereich kathodenseitig auftretende Druckspitzen zu erreichen, welche ein molares Transportverhältnis H₂O/H₂ beeinflussen.

Derartig schnelle Druckänderungen lassen sich beispielsweise durch ein Drosselventil erreichen, welches elektrisch ansteuerbar ist und sich in vorteilhafter Weise stromab eines Wasserabscheiders auf der Kathodenseite der Elektrolysezelle beziehungsweise des Elektrolyse-Stacks befindet.

Des Weiteren kann durch die erfindungsgemäß vorgeschlagene Lösung durch Einstellung des Wasserstransports von der Anodenseite zur Kathodenseite das Temperaturniveau auf der Kathodenseite beeinflusst werden.

### Kurze Beschreibung der Zeichnungen

Ausführungsformen der Erfindung werden anhand der Zeichnungen und der nachfolgenden Beschreibung näher erläutert.

Es zeigen:
- Figur 1: einen Elektrolyseur mit einem trocken betriebenen Kathodenraum und einem Anodenraum, dem ein Pumpenkreislauf zugeordnet ist und
- Figur 2: ein Diagramm, in welchem ein molares Verhältnis von Wasser zu Wasserstoff über einem Differenzdruck zwischen Anodenraum und Kathodenraum aufgetragen ist.

### Ausführungsformen der Erfindung

In der nachfolgenden Beschreibung der Ausführungsformen der Erfindung werden gleiche oder ähnliche Elemente mit gleichen Bezugszeichen bezeichnet, wobei auf eine wiederholte Beschreibung dieser Elemente in Einzelfällen verzichtet wird. Die Figuren stellen den Gegenstand der Erfindung nur schematisch dar.

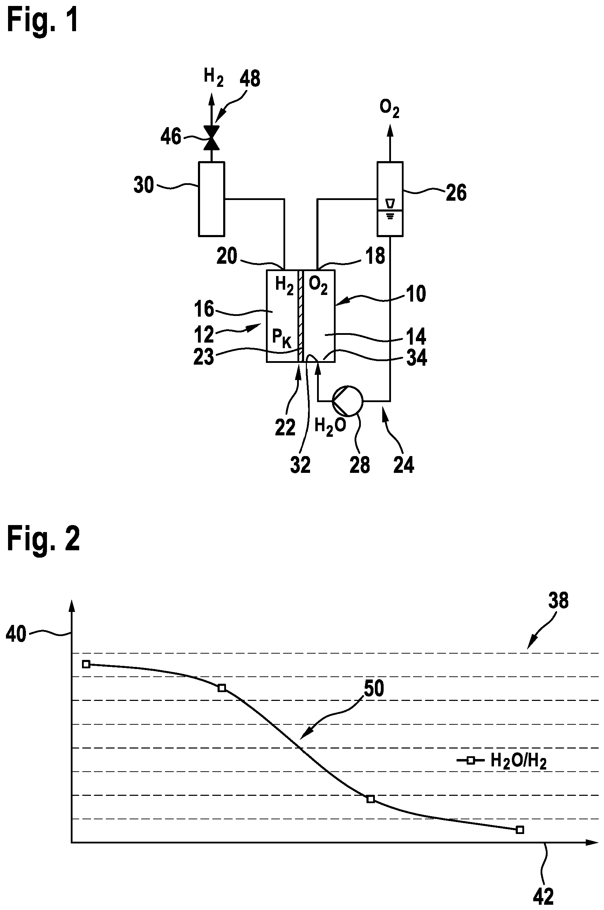

Figur 1 zeigt einen Elektrolyseur 10 mit einem Elektrolyse-Stack 12. Der Elektrolyseur 10 umfasst einen Anodenraum 14 und ein Kathodenraum 16, die voneinander durch eine für OH-Ionen durchlässige Membran 22 getrennt sind. Bei dieser handelt es sich vorzugsweise um eine als Polymermembran 23 ausgestaltete Membran 22. Im Kathodenraum 16, der temporär trocken betrieben wird, wird an einem Wasserstoffabzug 20 gasförmiger Wasserstoff in einen zweiten Wasserabscheider 30 abgezogen.

Im Anodenraum 14 des Elektrolyseurs 10 erfolgt an einem Sauerstoffabzug 18 ein Abzug von im Anodenraum 14 gebildetem gasförmigem Sauerstoff in einen ersten Wasserabscheider 26, der Teil eines Pumpenkreislaufs 24 ist. Der Pumpenkreislauf 24, in welchen der erste Wasserabscheider 26 integriert ist, umfasst des Weiteren eine Pumpe 28, über welche im Pumpenkreislauf 24 zirkulierendes Wasser an einer Wassereinspeisung 32 wieder in den Anodenraum 14 gelangt. Die Mündung der Wassereinspeisung 32 befindet sich im Boden 34 des Anodenraums 14. Der Pumpenkreislauf 24 wird zur Verringerung des erforderlichen Abdichtungsaufwands im Wesentlichen auf einem Druckniveau von etwa 1 bar betrieben.

Wie aus der Darstellung gemäß Figur 1 des Weiteren hervorgeht, befindet sich stromab eines zweiten Wasserabscheiders 30 auf der Kathodenseite ein Drosselventil 46. Das Drosselventil 46 wird vorzugsweise in einer Einbauposition 48 am Ausgang des zweiten Wasserabscheiders 30 angeordnet, die stromab des Kathodenraums 16 liegt.

Für den Fall, dass der Elektrolyseur 10 gemäß der Darstellung in Figur 1 mit Wasser betrieben wird, kommt vollentsalztes Wasser zum Einsatz, welches bevorzugt eine Leitfähigkeit von < 0,1 µS umfasst. Andererseits besteht die Möglichkeit, den Elektrolyseur 10 gemäß Figur 1 auch als alkalischen Elektrolyseur 10 zu betreiben. In diesem Fall kommt anstelle von vollentsalztem Wasser als umlaufendes flüssiges Medium im Anodenraum 14 eine KOH-Lösung zum Einsatz. Der in Figur 1 dargestellte Elektrolyse-Stack 12 umfasst den Anodenraum 14 zur Produktion von Sauerstoff sowie den Kathodenraum 16 zur Produktion von Wasserstoff. Der Anodenraum 14 ist Teil des Pumpenkreislaufs 24 mit dem ersten Wasserabscheider 26, so dass Sauerstoff abgetrennt werden kann und das Wasser über die Pumpe 28 erneut in den Anodenraum 14 gefördert werden kann. Auf der Kathodenseite wird im Kathodenraum 16 Wasserstoff gebildet, der ebenfalls über einen Wasserabscheider, in diesem Fall den zweiten Wasserabscheider 30 geführt wird, so dass der erhaltene Wasserstoff möglichst trocken ist. Der Druck wird wasserstoffseitig über das Drosselventil 46 auf beispielsweise 30 bar eingestellt, um den energetischen Kompressionsaufwand einer nachgelagerten Verdichtereinheit zu reduzieren, für den Fall, dass der Wasserstoff unter Druck gespeichert werden soll, was aufgrund des niedrigen molaren Gewichts von Wasserstoff in der Regel der Fall ist.

Um die Funktionsweise des erfindungsgemäß vorgeschlagenen Elektrolyseurs 10, ob mit vollentsalztem Wasser oder alkalisch mit einer KOH-Lösung, zu verbessern, wird temporär die Kathodenseite, d. h. der Kathodenraum 16 benetzt beziehungsweise befeuchtet. Dazu wird (vgl. Darstellung in Figur 2) bei einem bestimmten Betriebspunkt, gegeben beispielsweise durch eine bestimmte Temperatur sowie eine bestimmte Stromdichte, beispielsweise bei 45 °C und 0,8 A/cm² beobachtet, dass beim Ionentransport durch die als Polymermembran 23 beschaffene Membran 22 Wassermoleküle vom Anodenraum 14 durch die Membran 22 in den Kathodenraum 16 mitgerissen werden. An einem bestimmten Arbeitspunkt 38, wie er beispielsweise in Figur 2 für eine Temperatur von 45 °C und für eine Stromdichte von 0,8 A/cm² dargestellt ist, ergibt sich der in Figur 2 dargestellte Verlauf, d. h. eine Abnahme 50 des molaren Verhältnisses 40 von H₂O/H₂. Die Wasserdiffusion vom Anodenraum 14 zum Kathodenraum 16 kann durch die Variation des Differenzdrucks 42 zwischen Kathodenraum 16 und Anodenraum 14 beeinflusst werden. Je nach Höhe des Differenzdrucks 42 kann somit der Wassertransport in den Kathodenraum 16 beeinflusst werden und damit die Befeuchtung beziehungsweise die Benetzung der Kathode eingestellt werden. Durch das erfindungsgemäß vorgeschlagene Verfahren durch Ausnutzung des Wasser-Drags vom Anodenraum 14 in den Kathodenraum 16 kann mithin in bestimmten Intervallen eine Benetzung beziehungsweise Befeuchtung der Komponenten des Kathodenraums 16, insbesondere der als Polymermembran 23 ausgebildeten Membran 22 erreicht werden.

Durch diese temporär erfolgende Benetzung beziehungsweise Befeuchtung der Polymermembran 23 auf der Kathodenseite kann eine lokale Überhitzung bei schnellen Anfahrprozessen des Elektrolyseurs 10 vermieden werden. Durch die Anwendung des erfindungsgemäß vorgeschlagenen Verfahrens, d. h. die Ausnutzung der Wasserdiffusion vom Anodenraum 14 in den Kathodenraum 16 kann eine Vergleichmäßigung der Temperatur beziehungsweise eine Spaltung der OH-Ionen erreicht werden, so dass eine gleichmäßige Funktionsweise erreicht werden kann und lokale Hotspots hinsichtlich auftretender Übertemperaturen, die mittelfristig zur Degradation und kurzfristig zu Membranversagen führen würden, eliminiert werden können.

Der Darstellung gemäß Figur 2 ist zu entnehmen, wie bei steigendem Differenzdruck 42 zwischen Kathode und Anode eine Abnahme 50 des molaren Verhältnisses H₂O/H₂ 40 oder des Molenbruchs von Wassermolekülen zu Wasserstoffmolekülen erfolgt.

Durch die erfindungsgemäß vorgeschlagene Lösung, insbesondere durch das dem Kathodenraum 16 stromabwärts zugeordnete Drosselventil 46 kann in vorteilhafter Weise eine zeitliche Variation des im Kathodenraum 16 herrschenden Kathodendrucks p_{K} erreicht werden. Bei einer Variation im Sekundenbereich können kathodenseitig auftretende Druckspitzen erreicht werden, die ebenfalls das oben bereits erwähnte molare Verhältnis H₂O/H₂ 40 beeinflussen können. Derartige Druckvariationen werden durch eine geeignete Ansteuerung des insbesondere elektrisch ansteuerbaren Drosselventils 46 erreicht, welches sich kathodenseitig stromab des zweiten Wasserabscheiders 30 befindet.

Die Erfindung ist nicht auf die hier beschriebenen Ausführungsbeispiele und die darin hervorgehobenen Aspekte beschränkt. Vielmehr ist innerhalb des durch die Ansprüche angegebenen Bereichs eine Vielzahl von Abwandlungen möglich, die im Rahmen fachmännischen Handelns liegen.

## Patentansprüche

1. Verfahren zum Betrieb eines Elektrolyseurs (10) zur Herstellung von Wasserstoff und Sauerstoff, mit einer für OH-Ionen durchlässigen Membran (22), die einen Anodenraum (14) und einen Kathodenraum (16) voneinander trennt, mit nachfolgenden Verfahrensschritten:
a) Temporäres, trockenes Betreiben des Kathodenraums (16),
b) temporär stattfindende Diffusion von Wassermolekülen durch die Membran (22) vom Anodenraum (14) in den Kathodenraum (16),
c) Variation eines Differenzdrucks (42) zwischen Kathodenraum (16) und Anodenraum (14) mittels eines Drosselventils (46) und
d) Einstellen der Befeuchtung/Benetzung des Kathodenraums (16) durch Einstellung eines definierten Differenzdrucks (42).

2. Verfahren gemäß Anspruch 1, **dadurch gekennzeichnet, dass** eine kontrollierte Wasserdiffusion, vorzugsweise von voll entsalztem Wasser vom Anodenraum (14) in den Kathodenraum (16) erfolgt.

3. Verfahren gemäß den Ansprüchen 1 und 2, **dadurch gekennzeichnet, dass** zur kontrollierten Wasserdiffusion voll entsalztes Wasser mit einer elektrischen Leitfähigkeit < 0,1 µS eingesetzt wird.

4. Verfahren gemäß Anspruch 1, **dadurch gekennzeichnet, dass** bei einem alkalisch betriebenen Elektrolyseur (10) eine KOH-Lösung eingesetzt wird.

5. Verfahren gemäß den Ansprüchen 1 bis 4, **dadurch gekennzeichnet, dass** bei einer Absenkung eines Drucks p_{K} im Kathodenraum (16) ein molares Transportverhältnis (40) H₂O/H₂ erhöht wird.

6. Verfahren gemäß Anspruch 5, **dadurch gekennzeichnet, dass** der Druck p_{K} im Kathodenraum (16) durch entsprechende Ansteuerung des Drosselventils (46) im Sekundenbereich abgesenkt wird.

7. Verfahren gemäß den Ansprüchen 5 und 6, **dadurch gekennzeichnet, dass** eine Variation des Drucks p_{K} im Kathodenraum (16) und dadurch erzeugte Druckspitzen im Kathodenraum (16) das molare Transportverhältnis H₂O/H₂ (40) beeinflussen.

8. Verfahren gemäß Anspruch 1, **dadurch gekennzeichnet, dass** über den Wassertransport in den Kathodenraum (16) eine Temperatur im Kathodenraum (16) beeinflusst wird.

9. Verwendung des Verfahrens nach einem der Ansprüche 1 bis 8 zum Betreiben eines Elektrolyseurs (10) oder eines alkalischen Elektrolyseurs (10) mit temporärem Wassertransport durch eine Membran (22) zur Befeuchtung/Benetzung eines Kathodenraums (16).

## Claims

1. Method of operating an electrolyzer (10) for production of hydrogen and oxygen, having a membrane (22) permeable to OH ions that separates an anode chamber (14) and a cathode chamber (16) from one another, comprising the following process steps:
a) temporary dry operation of the cathode chamber (16),
b) temporary diffusion of water molecules through the membrane (22) from the anode chamber (14) into the cathode chamber (16),
c) varying a pressure differential (42) between cathode chamber (16) and anode chamber (14) by means of a throttle valve (46) and
d) adjusting the humidification/wetting of the cathode chamber (16) by setting a defined pressure differential (42).

2. Method according to Claim 1, **characterized in that** there is controlled diffusion of water, preferably of demineralized water, from the anode chamber (14) into the cathode chamber (16).

3. Method according to Claims 1 and 2, **characterized in that** demineralized water with an electrical conductivity < 0.1 µS is used for controlled diffusion of water.

4. Method according to Claim 1, **characterized in that** a KOH solution is used in an alkaline electrolyzer (10).

5. Method according to Claims 1 to 4, **characterized in that**, when a pressure p_{K} in the cathode chamber (16) is lowered, a molar transport ratio (40) H₂O/H₂ is increased.

6. Method according to Claim 5, **characterized in that** the pressure p_{K} in the cathode chamber (16) is lowered in the range of seconds by corresponding actuation of the throttle valve (46).

7. Method according to Claims 5 and 6, **characterized in that** a variation of the pressure p_{K} in the cathode chamber (16) and pressure peaks generated thereby in the cathode chamber (16) influence the molar transport ratio H₂O/H₂ (40).

8. Method according to Claim 1, **characterized in that** a temperature in the cathode chamber (16) is influenced via the transport of water into the cathode chamber (16).

9. Use of the method according to any of Claims 1 to 8 for operating an electrolyzer (10) or an alkaline electrolyzer (10) with temporary transport of water through a membrane (22) for humidification/wetting of a cathode chamber (16).

## Revendications

1. Procédé pour faire fonctionner un électrolyseur (10) destiné à produire de l'hydrogène et de l'oxygène, comprenant une membrane (22) perméable aux ions OH qui sépare une chambre anodique (14) et une chambre cathodique (16) l'une de l'autre, comprenant les étapes de procédé suivantes :
a) le fonctionnement temporaire à sec de la chambre cathodique (16),
b) la diffusion temporaire de molécules d'eau à travers la membrane (22) depuis la chambre anodique (14) vers la chambre cathodique (16),
c) la variation d'une pression différentielle (42) entre la chambre cathodique (16) et la chambre anodique (14) au moyen d'une soupape d'étranglement (46) et
d) le réglage de l'humidification/du mouillage de la chambre cathodique (16) par réglage d'une pression différentielle définie (42).

2. Procédé selon la revendication 1, **caractérisé en ce qu'**une diffusion contrôlée d'eau, de préférence d'eau entièrement déminéralisée, a lieu depuis la chambre anodique (14) vers la chambre cathodique (16).

3. Procédé selon les revendications 1 et 2, **caractérisé en ce que**, pour contrôler la diffusion de l'eau, on utilise de l'eau entièrement déminéralisée ayant une conductivité électrique < 0,1 µS.

4. Procédé selon la revendication 1, **caractérisé en ce qu'**une solution de KOH est utilisée dans un électrolyseur (10) fonctionnant de manière alcaline.

5. Procédé selon les revendications 1 à 4, **caractérisé en ce que**, lors d'une baisse d'une pression p_{K} dans la chambre cathodique (16), un rapport de transport molaire (40) H₂O/H₂ est augmenté.

6. Procédé selon la revendication 5, **caractérisé en ce que** la pression p_{K} dans la chambre cathodique (16) est réduite en quelques secondes par une commande appropriée de la soupape d'étranglement (46).

7. Procédé selon les revendications 5 et 6, **caractérisé en ce qu'**une variation de la pression p_{K} dans la chambre cathodique (16) et les pics de pression ainsi générés dans la chambre cathodique (16) influencent le rapport de transport molaire H₂O/H₂ (40).

8. Procédé selon la revendication 1, **caractérisé en ce que** le transport d'eau dans la chambre cathodique (16) permet d'influencer une température dans la chambre cathodique (16).

9. Utilisation du procédé selon l'une quelconque des revendications 1 à 8 pour faire fonctionner un électrolyseur (10) ou un électrolyseur alcalin (10) avec transport temporaire d'eau à travers une membrane (22) pour humidifier/mouiller une chambre cathodique (16).
